Europäisches Patentamt

European Patent Office

Office européen des brevets

(11) Publication number: **0 178 028**

**B1**

(12) **EUROPEAN PATENT SPECIFICATION**

(45) Date of publication of patent specification: **11.04.90**

(51) Int. Cl.⁵: **B 65 G 47/68**

(21) Application number: **85201625.2**

(22) Date of filing: **07.10.85**

(54) **In-line apparatus for containers, such as bottles and the like.**

(30) Priority: **08.10.84 NL 8403060**

(43) Date of publication of application:
**16.04.86 Bulletin 86/16**

(45) Publication of the grant of the patent:
**11.04.90 Bulletin 90/15**

(84) Designated Contracting States:
**BE DE FR GB NL**

(56) References cited:
**EP-A-0 033 773**
**DE-A-3 129 389**
**FR-A-2 533 200**
**GB-A-1 110 794**

(73) Proprietor: **Speciaal-Machinefabriek J.H. van Uitert B.V.**
**Industriestraat 14-16**
**NL-5107 NC Dongen (NL)**

(72) Inventor: **van Uitert, Johannes Hendrikus**
**Vaartweg 33**
**NL-5109 RB 's-Gravenmoer (NL)**

(74) Representative: **Lips, Hendrik Jan George, Ir. et al**
**HAAGSCH OCTROOIBUREAU Breitnerlaan 146**
**NL-2596 HG Den Haag (NL)**

Courier Press, Leamington Spa, England.

## Description

The invention relates to an in-line apparatus for the transformation of containers, such as bottles, tins, cans and the like, supplied standing erect beside and behind each other by means of a first supply conveyor, into a smaller and in particular single line for removal by means of a discharge conveyor moving at a higher speed than the supply conveyor such that the speeds of the tracks of the supply and discharge conveyors are about inversely proportional to the width of the relevant conveyors, the supply conveyor and the discharge conveyor being located on either side of a number of tracks of a transfer conveyor, said tracks being driven at various speeds such that a stepwise conversion is present between the speed of the supply conveyor and the speed of the discharge conveyor, the upper surfaces of all tracks being located in one common plane which, viewed transverse to the longitudinal direction of the tracks, is inclined upwardly from the supply conveyor, a guiding rod being present to transfer the containers from the supply conveyor to the transfer tracks and extending from the outside of the supply conveyor across the transfer tracks to the inner side of the discharge conveyor, one end of said guiding rod, by means of a first curved section passing into a guide rod extending along the supply conveyor, the other end of the guiding rod, by means of a second curved section passing into a guiding rod extending along the discharge conveyor, the centre of curvature of said section being positioned at the other side of the guiding rod than the centre of curvature of said first section, means being present for controlling the transverse gradient of the planes in which the supply conveyor, the transfer conveyor and the discharge conveyor are located.

Such an in-line apparatus is known from FR—A—2,533,200.

The object of the invention is to improve this known apparatus and to that purpose it is provided that the centre of curvature of said first curved section is positioned at the transition of the supply conveyor to the first track of said transfer conveyor, a substantially straight section being connected to said curved section and extending under an angle of about 45° up to the vicinity of the last track of the supply conveyor and passing there with said second curved section into a section being curved over more than 90° for mainly following the longitudinal axis of the transfer conveyor which is curved over 90° and extends itself between the supply conveyor and the discharge conveyor running mainly normal to each other, means being provided for controlling the speed of the tracks of the conveyors.

By the described positioning of the supply and discharge conveyor and by the special shape of the guiding rod it is achieved that containers being supplied by the supply conveyor are relatively fast passed onto the transfer conveyor, the tracks of which are driven at a gradually increasing speed as seen from the side of the supply conveyor, and nevertheless are supported in a very favourable way when the direction of movement of the containers is changing. By this the danger of topling over of containers will be decreased and less noise will be created by containers bumping against each other.

It can be remarked that GB—A—1,110,794 shows a transfer conveyor and a discharge conveyor, the longitudinal axis of the first one being curved.

The difference between this known apparatus and the apparatus according to the invention, however, is that in case of said known apparatus the guiding rod is continuously extending along the outside of the conveyor near the curved portion of the transfer conveyor and so in this curved portion the containers present on the conveyor are not pressed to faster moving tracks of the transfer conveyor. Further it can be remarked that in case of the known apparatus the conveyors are positioned in a horizontal plane.

According to a further embodiment of the invention the guiding rod will be positioned at a level above the tracks corresponding substantially with the centre of gravity of the containers, the distance between the guiding rod and the upper face of the tracks being so large that overturned containers can pass under the guiding rod to leave the tracks.

Apart from the guiding rod described above another guiding rod, located near the outside of the discharge conveyor can be positioned at such a distance above the surface of the discharge conveyor, that overturned containers may be pushed upwardly away from the discharge conveyor.

By this it can be achieved that no overturned containers are supplied to a cleaning station, a filling station or a similar apparatus, so that the operation thereof does not have to be interrupted.

According to the invention it is preferred that near the outside of the discharge track a ridge is present which extends substantially below the guiding rod present there, and is curved outward towards the inlet end of the discharge conveyor, one and another in such a way that overturned containers present at the outside of the discharge conveyor are pushed outward by the ridge and are removed from the discharge conveyor.

In this way a positive removal of overturned containers from the discharge conveyor is achieved.

In order to make the apparatus suitable for various types of containers it can be provided that the guiding rods are adjustable in vertical and horizontal direction.

Further transport tracks can be provided beside the lower and/or higher side of the discharge conveyor extending over a limited length beside the discharge conveyor for the discharge of overturned containers.

It may be provided that all tracks of the apparatus are driven by a common motor.

Further the said control means will preferably consist of sensor located along the transfer section for observing the joining and the movement of the containers, the signals provided by said control means being processed in a control unit controlling the speed and transverse gradient of the transfer section in dependence of the signals.

The control unit herein may be a programmed PLC of a microprocessor.

The invention is now elucidated by means of embodiments, shown in the drawing, in which:

Fig. 1 schematically shows a top view of an apparatus according to the invention;

Fig. 2 and 3 schematically show cross-sections respectively along the lines II—II and III—III of Fig. 1;

and

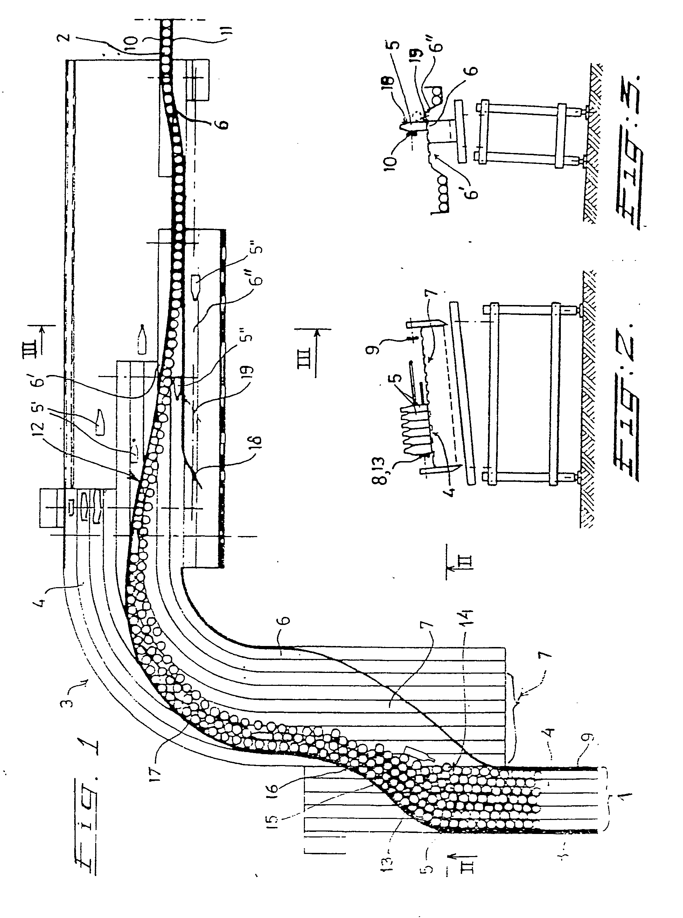

The apparatus shown in Figs. 1—3 comprises a supply conveyor 1, a discharge conveyor 2 and a transfer section 3.

The supply conveyor 1 consists in a known manner of a number of transport tracks or chains 4 located side by side and driven at the same speed and comprising flat links on which for example bottles 5 may be transported in a number of rows. The number of rows of bottles does not have to be equal to the number of tacks 4 located side by side.

In the shown embodiment the discharge conveyor 2 consists of a single track or chain 6, the speed of which is so much larger than that of the tracks 4, that all bottles supplied by the conveyor 1 can be discharged in a single line without blockage. It is, moreover, also possible that the discharge conveyor 2 comprises more than one track 6, for example if a plurality of rows of bottles should be formed in which case, however, the number of bottles located side by side is smaller than that on the supply conveyor 1. In fact, however, a single discharge row is usually formed.

The transport tracks 4 and 6 are disposed at some distance from each other viewed in transverse direction and both extend over a certain distance in the transfer section 3. The transfer section 3 is composed of a number of transport tracks or chains 7, the speeds of which are intermediate between those of the tracks 4 and 6 in such a way that a stepwise speed increase is obtained from the speed of the tracks 4 to the speed of the track 6. For obtaining these speeds use can be made of one single motor and transmitting means between this motor and the various tracks.

The supply conveyor 1 is limited by mutually parallel extending guiding rods 8 and 9 and the discharge conveyor 2 by mutually parallel extending guiding rods 10 and 11. The rods 8 and 10 are interconnected by means of the curved guiding rod 12. The guiding rod 12 comprises an initial sharply curved section 13, the centre of curvature 14 of which is positioned near the transition between the supply track 1 and the transfer section 3. The curved section extends over about 45° and then passes into a substantially straight section 15 and this section passes into a section 17, which in a known manner extends more parallel with the transport chains 6 and 7, by means of a sharply curved section 16, the centre of curvature of which is located at the other side of the guiding rod 12 than the first mentioned centre.

The upper surfaces of the transport tracks 4, 6 and 7 are located in one common plane, making an angle with the horizontal plane in such a manner that the tracks 4 are located lower than the track 6.

The bottles 5 will be moved sideways quickly from the transport tracks 4 to the faster running tracks 7 by the sharply curved section 13 of the guiding rod 12, whereby the bottles 5 will be moved apart quickly to arrive in-line onto the transport track 6. Also by the gradient of the surface of the transport tracks 4, 6 and 7, directed towards the guiding rod 12, it is assured that the bottles 5 remain pressed against the guiding rod 12, thus encountering the tendency to overturning of the bottles.

The guiding rod 12 is at such a level above the transport tracks 4, 6 and 7, that overturned bottles 5', after possibly having been entrained along the guiding rod 12, can pass at a certain moment underneath the guiding rod 12, so that they do not hamper other bottles in their transportation. For a positive discharge of bottles passing underneath the guiding rod 12 one or more tracks 6' may be applied in addition to the track 6, which are driven with the same or a slightly lower speed than the track, 6, and which can transport the overturned bottles to a collecting trough or similar, such as appears for example from Fig. 3.

The outer guiding rod 11 of the discharge track 6 has a somewhat outwardly curved part 18 near the inlet section of the discharge track 6 for obtaining a narrowing inlet for the bottles 5 towards the transport track 6. The guiding rod 11 is again positioned so high, that overturned bottles 5'' can roll away underneath it and for the discharge of such bottles an outer transport track 6'' is present. In order to avoid that bottles getting to the track 6'' may roll back because of the gradient of the upper surface of the transport track, a relatively low ridge 19 has been provided, which may be located mainly below the guiding rod 11. A curved inlet section of the ridge 19 also causes that overturned bottles 5'' located on the track 6 receive an additional impulse to be moved faster to the discharge end 6''.

As appears from Fig. 1 the longitudinal axes of the tracks 4 of the supply conveyor 1 and of the discharge conveyor 2 are running mainly normal to each other, the longitudinal axis of the transfer tracks 6 of the transfer section 3 being curved.

In case of the shown embodiment the supply conveyor 1 is connected to the outer side and the discharge conveyor 2 to the inner side of the curved transfer conveyor 3.

By the shown positioning the bottles 5 now are pressed more strongly against the section 17 of the guiding rod 12 by the centrifugal force, so that they are still better supported during their transfer to the continuously faster running transport tracks 7.

Further it is possible to allow the track 6 of the discharge conveyor 2 to run somewhat slower than the preceding track 7, if this should be favourable for bringing the containers into one row on the discharge track near to each other. Such a slow-down, of course, my also be used in the system of the tracks 7.

## Claims

1. In-line apparatus for the transformation of containers (5), such as bottles, tins, cans and the like, supplied standing erect beside and behind each other by means of a first supply conveyor (1), into a smaller and in particular single line for removal by means of a discharge conveyor (2) moving at a higher speed than the supply conveyor (1) such that the speeds of the tracks (4, 6) of the supply and discharge conveyors are about inversely proportional to the width of the relevant conveyors (1, 2), the supply conveyor (1) and the discharge conveyor (2) being located on either side of a number of tracks (7) of a transfer conveyor (3), said tracks (7) being drive at various speeds such that a stepwise conversion is present between the speed of the supply conveyor (1) and the speed of the discharge conveyor (2), the upper surfaces of all tracks (4, 6, 7) being located in one common plane which, viewed transverse to the longitudinal direction of the tracks (4, 6, 7), is inclined upwardly from the supply conveyor (1), a guiding rod (12) being present to transfer the containers (5) from the supply conveyor (1) to the transfer tracks (7) and extending from the outside of the supply conveyor (1) across the transfer tracks (7) to the inner side of the discharge conveyor (2), one end of said guiding rod, by means of a first curved section (13) passing into a guiding rod (8) extending along the supply conveyor, the other end of the guiding rod (12), by means of a second curved section (16) passing into a guiding rod (10) extending along the discharge conveyor (2), the centre of curvature of said section (16) being positioned at the other side of the guiding rod (12) than the centre of curvature (14) of said first section (13), means being present for controlling the transverse gradient of the planes in which the supply conveyor (1), the transfer conveyor (3) and the discharge conveyor (2) are located, characterized in that the centre of curvature (14) of said first curved section is positioned at the transition of the supply conveyor (1) to the first track of said transfer conveyor (3), a substantially straight section (15) being connected to said curved section (13) and extending under an angle of about 45° up to the vicinity of the last track of the supply conveyor (1) and pasing there with said second curved section (16) into a section (17) being curved over more than 90° for mainly following the longitudinal axis of the transfer conveyor (3) which is curved over 90° and extends itself between the supply conveyor (1) and the discharge conveyor (2) running mainly normal to each other, means being provided for controlling the speed of the tracks of the conveyors.

2. Apparatus according to claim 1, characterized in that the guiding rod (12) is positioned at a level above the tracks (4, 6, 7) corresponding substantially with the centre of gravity of the containers (5), the distance between the guiding rod (12) and the upper face of the conveyors (1, 2, 3) being so large that overturned containers (5') can pass under the guiding rod (12) to leave the conveyors (1, 2, 3).

3. Apparatus according to claim 1 or 2, characterized in that a guiding rod (11), located at the outside of the discharge conveyor (2) is positioned at such a distance above the surface of the discharge conveyor (2), that overturned containers (5'') may be pushed upwardly away from the discharge conveyor (2).

4. Apparatus according to one of the preceding claims, characterized in that near the outside of the discharge track (7) a ridge (19) is present which extends substantially below the guiding rod (18) present there, and is curved outward towards the inlet end of the discharge conveyor (2), one and another in such a way that overturned containers (5'') present at the outside of the discharge conveyor (2) are pushed outward by the ridge (19) and are removed from the discharge conveyor (2).

5. Apparatus according to one of the preceding claims, characterized in that further transport tracks (6, 6'') are provided beside the lower and/or higher side of the discharge conveyor (2) extending over a limited length beside the discharge conveyor (2) for the discharge of overturned containers (5', 5'').

## Patentansprüche

1. Vorrichtung zum Aufteilen von Gefässen (5), wie Flaschen, Büchsen und dergleichen, aufrecht stehend neben- und nacheinander mittels eines ersten Zuförderers (1) zugeführt, auf eine schmälere und insbesondere einreihige Spur zur Entfernung mittels eines Abförderers (2), der sich mit einer grösseren Geschwindigkeit als der Zuförderer (1) bewegt und zwar derart dass die Geschwindigkeiten der Bahnen (4, 6) der Zu- und Abförderer ungefähr umgekehrt proportional zur Breite der betreffenden Förderer (1, 2) sind, wobei der Zuförderer (1) und der Abförderer (2) sich beiderseits einer Anzahl Bahnen (7) eines Uebergangsförderers (3) befinden und diese Bahnen (7) mit verschiedenen Geschwindigkeiten derart angetrieben werden, dass ein stufenweiser Uebergang zwischen der Geschwindigkeit des Zuförderers (1) und der Geschwindigkeit des Abförderers (2) vorhanden ist, wobei die oberen Flächen aller Bahnen (4, 6, 7) in einer gemeinsamen Ebene liegen, die quer zur Längsrichtung der Bahnen (4, 6, 7) gesehen von dem Zuförderer (1) ab nach oben geneigt ist, wobei eine Führungsstange (12) vorgesehen ist um die Gefässe (5) von dem Zuförderer (1) zu den Uebergangsbahnen (7) hin zu bringen und sich von der Aussenseite des Zuförderers (1) schräg über die Uebergangsbahnen (7) bis zur Innenseite des Abförderers (2) erstreckt, wobei ein Ende der genannten Führungsstange mittels eines ersten gebogenen Abschnitts (13) in eine Führungsstange (8) übergeht, die sich am Zuförderer entlang erstreckt, während das andere Ende der Führungsstange (12) mittels eines zweiten gebogenen Abschnitts (16) in eine Führungsstange (10) übergeht, die sich am Abförder (2) entlang erstreckt, wobei der Krümmungsmittelpunkt des genannten Abschnitts (16) sich auf der anderen Seite der Führungsstange (12) als der Krümmungsmittelpunkt (14) des genannten ersten Abschnitts (13) befindet, wobei Mittel zur Regelung der Querneigung der Ebenen vorgesehenen sind, in denen sich der Zuförerder (1), der Uebergangsförderer (3) und der Abförderer (2) befinden, dadurch gekennzeichnet, dass der Krümmungsmittelpunkt (14) des genannten ersten gebogenen Abschnitts sich beim Uebergang des Zuförderers (1) nach der ersten Bahn des genannten Uebergangsförderers (3) befindet, wobei ein im wesentlichen gerader Abschnitt (15) mit dem genannten gebogenen Abschnitt (13) verbunden ist und sich unter einem Winkel von etwa 45° bis nahe der letzten Bahn des Zuförderers (1) erstreckt und dort mit dem zweiten gebogenen Abschnitt (16) in einen Abschnitt (17) übergeht, der mehr also 90° gebogen ist um im wesentlichen der Längsachse des Uebergangsförderers (3) zu folgen, der um 90° gebogen ist und sich zwischen dem Zuförderer (1) und dem Abförderer (2) erstreckt, die im wesentlichen senkrecht zueinander verlaufen, wobei Mittel zur Regelung der Geschwindigkeit der Bahnen der Förderer vorgesehen sind.

2. Vorrichtung nach Anspruch 1, dadurch gekennzeichnet, dass die Führungsstange (12) sich auf einer Höhe über den Bahnen (4, 6, 7) befindet, die im wesentlichen dem Schwerpunkt der Gefässe (5) entspricht, wobei der Abstand zwischen der Führungsstange (12) und der oberen Fläche der Förderer (1, 2, 3) so gross ist, dass umgefallene Gefässe (5') unter der Führungsstange (12) passieren können um die Förderer (1, 2, 3) zu verlassen.

3. Vorrichtung nach Anspruch 1 oder 2, dadurch gekennzeichnet, dass eine sich bei der Aussenseite des Abförderers (2) befindende Führungsstange (11) in einem derartigen Abstand über der Oberfläche des Abförderers (2) vorgesehen ist, dass umgefallene Gefässe (5'') nach oben von dem Abförderer (2) weg gedrückt werden können.

4. Vorrichtung nach einem der vorhergehenden Ansprüche, dadurch gekennzeichnet, dass nahe der Aussenseite der Abfuhrbahn (7) eine Leiste (19) vorgesehen ist, die sich im wesentlichen unter der dort vorhandenen Führungsstange (18) erstreckt und nach aussen zum Einlassende des Abförderers (2) hin gebogen ist, dies alles derart dass sich auf der Aussenseite des Abförderers (2) befindende umgefallene Gefässe (5'') durch die Leiste (19) nach aussen gedrückt werden und von dem Abförderer (2) entfernt werden.

5. Vorrichtung nach einem der vorhergehenden Ansprüche, dadurch gekennzeichnet, dass weitere Förderbahnen (6', 6'') neben der unteren und/oder hohen Seite des Abförderers (2) vorgesehen sind, die sich über eine beschränkte Länge neben dem Abförderer (2) zum Abführen von umgefallenen Gefässen (5', 5'') erstrecken.

**Revendications**

1. Dispositif de transformation à la chaîne de récipients (5) tels que des bouteilles, des boîtes en fer-blanc, des boîtes de conserve et autres, introduits debout les uns derrière et à côté des autres au moyen d'un premier transporteur d'introduction (1), vers une chaîne plus petite et en particulier unique pour les évacuer au moyen d'un transporteur de déchargement (2) se déplaçant à une vitesse plus élevée que celle du transporteur d'introduction (1), de façon à ce que les vitesses des pistes (4, 6) des transporteurs d'introduction et de déchargement soient pratiquement inversement proportionnelles à la largeur des transporteurs considérés (1, 2), le transporteur d'introduction (1) et le transporteur de déchargement (2) étant situés d'un côté ou de l'autre d'un certain nombre de pistes (7) d'un transporteur de transfert (3), lesdites pistes (7) étant entraînées à diverses vitesses telles qu'une conversion progressive s'effectue entre la vitesse du transporteur d'introduction (1) et la vitesse du transporteur de déchargement (2), les surfaces supérieures de toutes les pistes (4, 6, 7) se situant dans un plan commun qui, vu perpendiculairement à la direction longitudinale des pistes ( 4, 6, 7), est incliné vers le haut à partir du transporteur d'introduction (1), une rampe de guidage (12) étant présente pour transférer les récipients (5) du transporteur d'introduction (1) vers les pistes de transfert (7) et se prolongeant de l'extérieur de transporteur d'introduction (1) en travers des pistes de transfert (7) jusqu'au côté intérieur du transporteur de déchargement (2), une extrémité de ladite rampe de guidage se raccordant, par l'intermédiaire d'une première section incurvée (13), à une rampe de guidage (8) se prolongeant le long du transporteur d'introduction, l'autre extrémité de la rampe de guidage (12) se raccordant, au moyen d'une seconde section incurvée (16), à une rampe de guidage (10) se prolongeant le long du transporteur de déchargement (2), le centre de courbure de ladite section (16) étant disposé de l'autre côté de la rampe de guidage (12) par rapport au centre de courbure (14) de ladite première section (13), un moyen étant présent pour commander le gradient transversal des plans lesquels le transporteur d'introduction (1), le transporteur de transfert (3) et le transporteur de déchargement (2) sont situés, caractérisé en ce que le centre de courbure (14) de ladite première section est situé à la transition entre le transporteur d'introduction (1) et la première piste dudit transporteur de transfert (3), une section sensiblement rectiligne (15) étant reliée à ladite section incurvée (13) et se prolongeant en formant un angle d'environ 45° jusqu'au voisinage de la dernière piste du transporteur d'introduction (1) et se raccordant à cet endroit, en association avec ladite deuxième section incurvée (16), à une section (17) qui est incurvée de plus de 90° de façon à suivre essentiellement l'axe longitudinal du transporteur de transfert (3) qui est incurvé de 90° et se prolonge lui-même entre le transporteur d'introduction (1) et le transporteur de déchargement (2) qui se déplacent sensiblement perpendiculairement l'un à l'autre, un moyen étant prévu pour commander la vitesse des pistes des transporteurs.

2. Dispositif selon la revendication 1, caractérisé en ce que la rampe de guidage (12) est disposée à un niveau supérieur à celui des pistes (4, 6, 7) correspondant sensiblement au centre de gravité des récipients (5), la distance entre la rampe de guidage (12) et la face supérieure des transporteurs (1, 2, 3) étant suffisamment grande pour que des récipients renversés (5') puissent passer sous la rampe de guidage (12) pur quitter les transporteurs (1, 2, 3).

3. Dispositif selon la revendication 1 ou 2, caractérisé en ce qu'une rampe de guidage (11), située à l'extérieur du transporteur de déchargement (2), est disposée au-dessus de la surface du transporteur de déchargement (2) à une distance telle que des récipients renversés (5'') puissent être éloignés vers le haut du transporteur de déchargement (2).

4. Dispositif selon l'une des revendications précédentes, caractérisé en ce que, à proximité de l'extérieur de la piste de déchargement (7), une nervure (19) qui s'étend sensiblement sous la rampe de guidage (18) est présente à cet entroit, et s'incurve vers l'extérieur et vers l'extrémité d'entrée du transporteur de déchargement (2) de telle manière que des récipients renversés (5'') présents à l'extérieur du transporteur de déchargement (2) soient repoussés vers l'extérieur par la nervure (19) et soient retirés du transporteur de déchargement (2).

5. Dispositif selon l'une des revendications précédentes, caractérisé en ce que des pistes de transport supplémentaires (6', 6'') sont prévues à côté du côté inférieur et/ou supérieur de transporteur de déchargement (2) et se prolongent sur une longueur limitée à côté du transporteur de déchargement (2) pour décharger les récipients renversés (5', 5'').

Fig. 1

Fig. 2.

Fig. 3.

EP 0 178 028 B1